# EUROPÄISCHE PATENTSCHRIFT

(11) **EP 1 115 348 B1**
(45) Veröffentlichungstag und Bekanntmachung des Hinweises auf die Patenterteilung: **16.04.2003**
(21) Anmeldenummer: 00954356.2
(22) Anmeldetag: 22.07.2000
(51) Int. Cl.: A61C 13/277, A61C 13/273

(54) **VERBINDUNGSELEMENT ZUR BEFESTIGUNG ABNEHMBARER ZAHNPROTHESEN AN ZAHNKRONEN ODER ZAHNIMPLANTATEN**
JOINING ELEMENT FOR FASTENING DETACHABLE TOOTH PROSTHESES TO TOOTH CROWNS OR TO TOOTH IMPLANTS
ELEMENT D'ASSEMBLAGE POUR FIXER DES PROTHESES DENTAIRES AMOVIBLES SUR DES COURONNES OU DES IMPLANTS DENTAIRES

(30) Priorität: 31.07.1999 DE 19936121
(43) Veröffentlichungstag der Anmeldung: 18.07.2001
(73) Patentinhaber: ZL Microdent-Attachment GmbH & Co. KG, 58339 Breckerfeld (DE)
(72) Erfinder: WINTERMANTEL, Stefan, D-72116 Mössingen (DE)
(74) Vertreter: Dörner, Lothar, Dipl.-Ing.
(86) Internationale Anmeldenummer: DE0002387
(87) Internationale Veröffentlichungsnummer: WO01008589

(56) Entgegenhaltungen:
- DE-A- 4 423 768
- DE-A- 19 728 863

## Beschreibung

Die Erfindung betrifft ein Verbindungselement zur Befestigung abnehmbarer Zahnprothesen an Zahnkronen oder Zahnimplantaten mit einem quer zur Abzugsrichtung der Prothese verschieblich gelagerten Riegel, der mit seinen für die Verriegelung wirksamen Anteilen durch die Kraft einer oder mehrerer Federn von der Abzugsrichtung der Prothese aus gesehen unter Bereiche eines an eine oder mehrere Zahnkronen bzw. ein oder mehrere Zahnimplantate angeformten, festsitzenden Elements führbar und durch Betätigen eines auf den Riegel wirkenden Druckknopfs mit seinen für die Verriegelung wirksamen Anteilen gegen diese Federkraft wieder aus diesen Bereichen entfernbar ist.

Zur Befestigung abnehmbarer Zahnprothesen an überkronten Zähnen oder Zahnimplantaten kommen entweder aktive oder passive Verbindungselemente zur Anwendung. Bei den aktiven Verbindungselementen wird die Prothese durch Reibschluss oder durch das Einrasten eines federnden Elements mit der Zahnkrone oder dem Zahnimplantat verbunden. Bei Abnahme der Prothese muss die Reibungskraft oder die Federkraft überwunden werden. Die aktiven Verbindungselemente haben den Nachteil, dass im Lauf der Zeit die Reibungskraft aufgrund der Abnutzung oder die Federkraft aufgrund der Federermüdung nachlassen kann, so dass der Prothesenhalt nicht mehr gewährleistet ist. Außerdem können parodontal schwache Restzähne oder Implantate geschädigt werden, wenn die Abzugskraft der Prothese nicht genau definiert ist. Passive Verbindungselemente vermeiden diese Nachteile. Hier wird der Prothesenhalt durch einen reinen Formschluss mittels einer Riegelvorrichtung erzielt.

Nach dem Stand der Technik kommen heute noch meist die herkömmlichen zahntechnischen Riegelformen - Drehriegel, Schwenkriegel und Steckriegel bzw. Schubriegel - zur Anwendung. Die öffnung dieser Riegel erfolgt meist dadurch, dass der Patient mit dem Fingernagel in eine Nut greift. Das hierzu erforderliche manuelle Geschick ist jedoch nicht bei jedem Patienten gegeben. Eine Sonderform eines Schubriegels stellt eine bekannte Konstruktion dar, bei der die öffnung des Riegels mittels eines Schlüssels erfolgt, der in eine dafür vorgesehene Bohrung eingeführt wird.

Zur Erleichterung der Handhabung wurden auch sogenannte halbautomatische Riegel vorgeschlagen, bei denen der Riegel durch Betätigen eines Druckknopfs gegen die Kraft einer Feder geöffnet wird. Ein derartiger halbautomatischer Riegel ist beispielsweise in der DE 37 20 623 A1 beschrieben. Diese halbautomatischen Riegel haben jedoch den Nachteil, dass der Druckknopf während der Abnahme der Prothese gedrückt bleiben muss, was wieder manuelle Schwierigkeiten verursachen kann.

Es sind auch sogenannte vollautomatische Riegel bekannt, die die Bedienung weiter erleichtern. Bei den bekannten Konstruktionen solcher Riegel greift nach Bedienung des federbelasteten Druckknopfs ein quer zur Bewegungsrichtung des Riegels wirkendes Rastelement in Form einer Blattfeder oder einer mit einer zusätzlichen Schraubenfeder belasteten Federplatte aus der okklusalen Richtung in eine Ausfräsung an der zylindrisch geformten Riegelachse ein und hält diese fest, so dass der Druckknopf zur Abnahme der Prothese losgelassen werden kann. Das Rastelement stützt sich dabei an einem Anschlag des festsitzenden Teils ab, so dass beim Einrasten gleichzeitig die Prothese gering angehoben wird. Beim Einsetzen der Prothese stößt das Rastelement wieder gegen diesen Anschlag und wird dadurch zurückgesetzt, wodurch die Riegelachse wieder freigegeben wird.

Nachteilig ist bei diesen Lösungen einerseits der hohe Bauaufwand durch die zusätzliche Feder. Andererseits ist der Rastmechanismus störanfällig. Wenn die Prothese nicht völlig reibungsfrei am festsitzenden Teil aufsitzt und die Kraft der zweiten Feder nicht ausreicht, diese Reibung zu überwinden, dann versagt der Rastmechanismus.

Vom Anmelder wurde in der DE 197 28 863 C2 eine vollautomatische Riegelvorrichtung vorgeschlagen, bei der eine im Druckknopf bzw. Riegel oder im Gehäuse beweglich gelagerte Arretiervorrichtung vorgesehen ist, die den Riegel nicht bei Eingliederung der Prothese, wie bei den anderen vollautomatischen Riegeln, sondern bereits bei der Abnahme der Prothese wieder freigibt. Die beschriebene Störanfälligkeit der anderen vollautomatischen Riegel konnte damit beseitigt werden. Als Nachteil erwies sich jedoch die aufwendige Fertigung der Riegelvorrichtung.

Der vorliegenden Erfindung liegt die Aufgabe zugrunde, eine leicht bedienbare Zahnprothesenbefestigung in Form eines vollautomatischen Riegels zu schaffen, die auch bei erhöhter Reibung zwischen abnehmbarer Prothese und festsitzendem Teil einwandfrei funktioniert und die einen vergleichsweise geringen Fertigungsaufwand benötigt.

Die Aufgabe wird durch ein Verbindungselement mit den Merkmalen des Anspruchs 1 gelöst. Die Unteransprüche enthalten vorteilhafte Weiterbildungen des erfindungsgemäßen Verbindungselements. Im Prinzip wird bei der Erfindung die aus der DE 197 28 863 C2 bekannte Idee einer beweglich gelagerten Arretiervorrichtung, die bei Betätigen eines Druckknopfs durch das Zusammenwirken von Anschlag- oder Steuerflächen in Bewegung versetzt wird, wieder aufgegriffen. Jedoch ist jetzt im Gegensatz zu den dort beschriebenen Bauformen ähnlich wie bei den übrigen bekannt gewordenen vollautomatischen Riegeln die Funktion der Arretiervorrichtung mit einem leichten Anheben der Prothese verbunden. Bei Betätigen des Druckknopfs gegen die Kraft einer oder mehrerer Federn wird diese Federkraft oder die Bewegung des Riegels mittels Anschlag- und Führungsflächen derart umgelenkt, dass sich die Arretiervorrichtung bewegt. Mittels eines Anschlags am festsitzenden Teil bewirkt diese Bewegung wiederum eine geringe Anhebung der Prothese in Abzugsrichtung. Ferner kann die Federkraft durch Anschlag- und Führungsflächen derart umgelenkt werden, dass sie die Prothese in dieser etwas angehobenen Position hält. Dies führt zu Konstruktionen, bei denen die Freigabe des Riegels durch die Arretiervorrichtung nicht wie bei den Lösungen der DE 197 28 863 C2 bei der Abnahme, sondern erst bei der Eingliederung der Prothese erfolgt. Die Arretiervorrichtung hält durch das Zusammenwirken weiterer Anschlagflächen den Riegel gegen die Kraft der Feder fest. Bei der Wiedereingliederung der Prothese verursachen dieselben Anschlagflächen, die bei der Ausgliederung die Anhebung der Prothese bewirkt haben, das Zurücksetzen der Arretiervorrichtung, welche nun den Riegel wieder freigibt. Die Feder kann nun den Riegel zurückführen, so dass die Verriegelung wieder wirksam wird.

Ferner sind jedoch auch Abwandlungen möglich, bei denen beim Drücken des Druckknopfs die Arretiervorrichtung zwar die Anhebung der Prothese bewirkt, den Riegel jedoch nicht selbst festhält. Der Riegel ist aber zunächst trotzdem arretiert: Durch das leichte Anheben der Prothese kann der Riegel ja nicht mehr in die zugehörigen Unterschnitte zurückgeführt werden. Der Riegel wird aber bei Abnahme der Prothese wie bei den aus der DE 197 28 863 C2 bekannten Konstruktionen zurückgeführt, so dass wie dort Schrägflächen vorgesehen sein müssen, die den Riegel bei Eingliederung der Prothese gegen die Kraft der Feder führen.

Zur Verwirklichung der Idee sind eine Fülle konstruktiver Lösungen denkbar. Im Folgenden werden nur einige dieser konstruktiven Möglichkeiten mit Bezug auf die Zeichnungen näher dargestellt. Die bei den verschiedenen beschriebenen konstruktiven Möglichkeiten dargestellten Einzelelemente sind auch miteinander kombinierbar.

Es zeigen:
- Fig. 1: einen senkrechten zentralen Schnitt entlang der Riegellängsachse durch ein erstes Verbindungselement in Verriegelungsstellung;
- Fig. 2: eine der Fig. 1 entsprechende Schnittdarstellung des Verbindungselements in Entriegelungsstellung;
- Fig. 3: eine Schnittansicht entlang der Linie III-III durch das Verbindungselement aus Fig. 1;
- Fig. 4: eine Schnittansicht entlang der Linie IV-IV durch das Verbindungselement aus Fig. 1;
- Fig. 5: eine Schnittansicht entlang der Linie V-V durch das Verbindungselement aus Fig. 1;
- Fig. 6: einen senkrechten zentralen Schnitt entlang der Riegellängsachse durch eine abgewandelte Form des Verbindungselements aus Fig. 1;
- Fig. 7: eine Schnittansicht entlang der Linie VII-VII durch das Verbindungselement aus Fig. 6;
- Fig. 8: eine Schnittansicht entlang der Linie VIII-VIII durch das Verbindungselement aus Fig. 6;
- Fig. 9: eine der Fig. 8 entsprechende Schnittdarstellung quer zur Riegellängsachse einer weiteren Abwandlung des Verbindungselements aus Fig. 1;
- Fig. 10: einen horizontalen zentralen Schnitt entlang der Riegellängsachse durch eine weitere Abwandlung des Verbindungselements aus Fig. 1;
- Fig. 11: einen horizontalen zentralen Schnitt entlang der Riegellängsachse durch ein zweites Verbindungselement;
- Fig. 12: eine Schnittansicht entlang der Linie XII-XII durch das Verbindungselement aus Fig. 11;
- Fig. 13: eine Schnittansicht entlang der Linie XIII-XIII durch das Verbindungselement aus Fig. 11;
- Fig. 14: eine Schnittansicht entlang der Linie XIV-XIV durch das Verbindungselement aus Fig. 11;
- Fig. 15: einen senkrechten zentralen Schnitt entlang der Riegellängsachse durch ein drittes Verbindungselement;
- Fig. 16: einen senkrechten zentralen Schnitt entlang der Riegellängsachse durch ein viertes Verbindungselement;
- Fig. 17: einen horizontalen zentralen Schnitt entlang der Riegellängsachse durch ein fünftes Verbindungselement;
- Fig. 18: eine Schnittansicht entlang der Linie XVIII-XVIII durch das Verbindungselement aus Fig. 17;
- Fig. 19: eine Schnittansicht entlang der Linie XIX-XIX durch das Verbindungselement aus Fig. 17;
- Fig. 20: eine Schnittansicht entlang der Linie XX-XX durch das Verbindungselement aus Fig. 17;
- Fig. 21: eine Schnittansicht entlang der Linie XXI-XXI durch das Verbindungselement aus Fig. 17.

Bei allen Zeichnungen sind Schnitte entweder vertikal parallel zur Riegellängsachse, horizontal parallel zur Riegellängsachse oder quer zur Riegellängsachse gezeigt, wobei die Riegellängsachse in allen Fällen ungefähr quer zur Zahnreihe und ungefähr parallel zur Kaufläche liegt. Die Druckknöpfe D der einzelnen Verbindungselemente werden aus optischen Gründen in der Regel auf die Zungenseite verlegt.

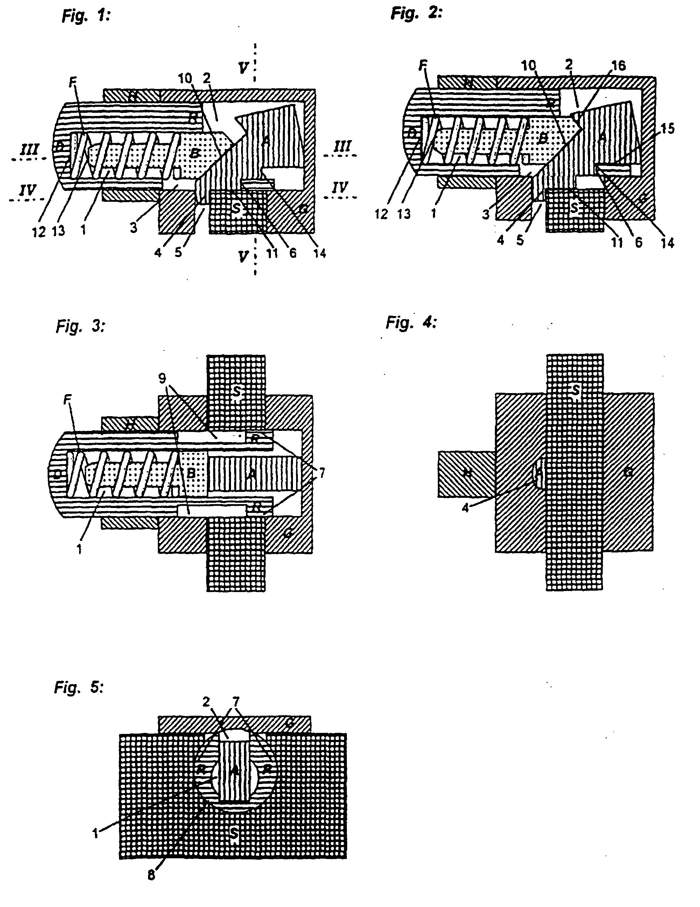

Fig. 1 zeigt ein Verbindungselement mit einem kastenförmigen Gehäuse G in Verriegelungsstellung. Mit S ist ein Stegfortsatz oder ein Steg bezeichnet, der an eine Zahnkrone bzw. ein Zahnimplantat oder auch an mehrere Zahnkronen oder Zahnimplantate angeformt ist, also fest in der Mundhöhle befestigt ist. Im Gehäuse G ist ein ungefähr zylindrisch geformter Riegel R entlang seiner Längsachse verschieblich gelagert. Die Führung des Riegels außerhalb des Gehäuses im Bereich des Prothesenkörpers kann durch eine Hülse H verbessert werden. Der Riegel R trägt einen Druckknopf D, welcher zur Entriegelung der Prothese vom Patienten mit der Fingerkuppe bedient werden kann. Im Gehäuse G ist eine plattenförmige Arretiervorrichtung A derart gelagert, dass sie im Wesentlichen nur eine Bewegung quer zur Riegellängsachse ausführen kann. Im Riegel R befindet sich eine hier schematisch dargestellte Feder F, die sich über einen Bolzen B, der auch fest mit ihr verbunden sein kann, und die Arretiervorrichtung A im Gehäuse G abstützt und so den Riegel R mit dem Druckknopf D in Richtung des Druckknopfs D drückt.

Die Feder F und der Bolzen B sind in einer passenden Bohrung 1 des Riegels R (Fig. 1 bis 3, Fig. 5) geführt. Diese Bohrung wird in okklusaler und basaler Richtung durch zwei Schlitze 2 (Fig. 1, 2 und 5) und 3 (Fig. 1 und 2) ergänzt, die die Arretiervorrichtung A aufnehmen. Ein Fortsatz 4 der Arretiervorrichtung A (Fig. 1, 2 und 4) befindet sich in einer zugehörigen Ausnehmung 5 des Gehäuses G (Fig. 1 und 2) und sichert so die Arretiervorrichtung A und den Riegel R gegen Rotation. Der Riegel R wird außerdem gegen ein Herausfallen in Richtung der Wirkung der Federkraft dadurch gesichert, dass er mit einer Anschlagfläche 6 (Fig. 1 und 2) gegen die Arretiervorrichtung A stößt (Fig. 1), die wiederum in dieser Richtung über den Fortsatz 4 in der Ausnehmung 5 des Gehäuses G geführt ist.

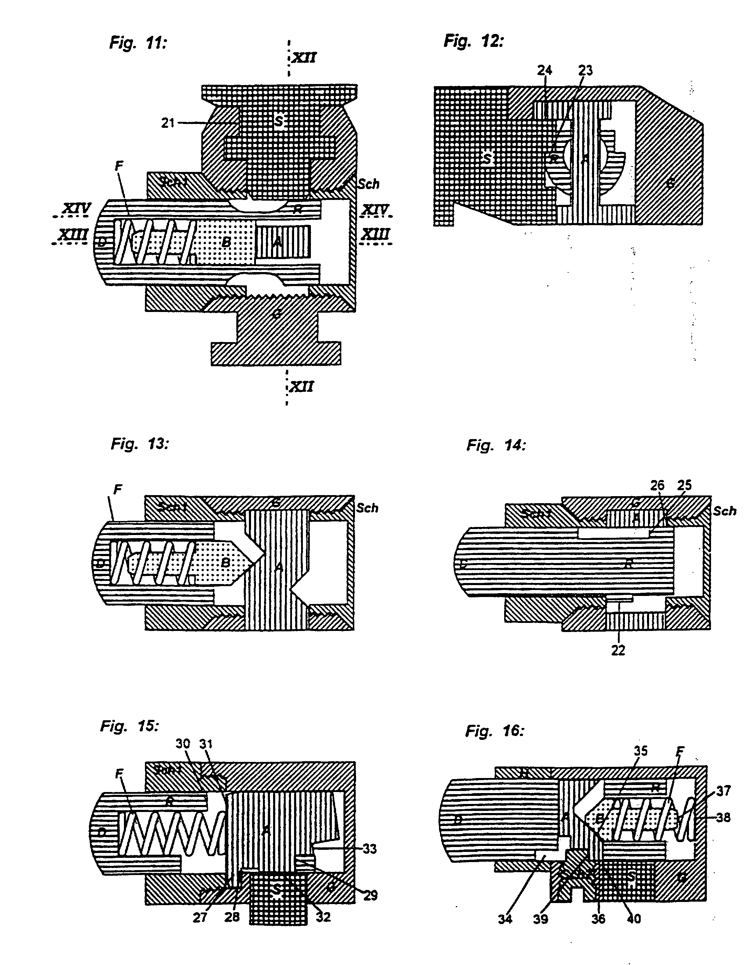

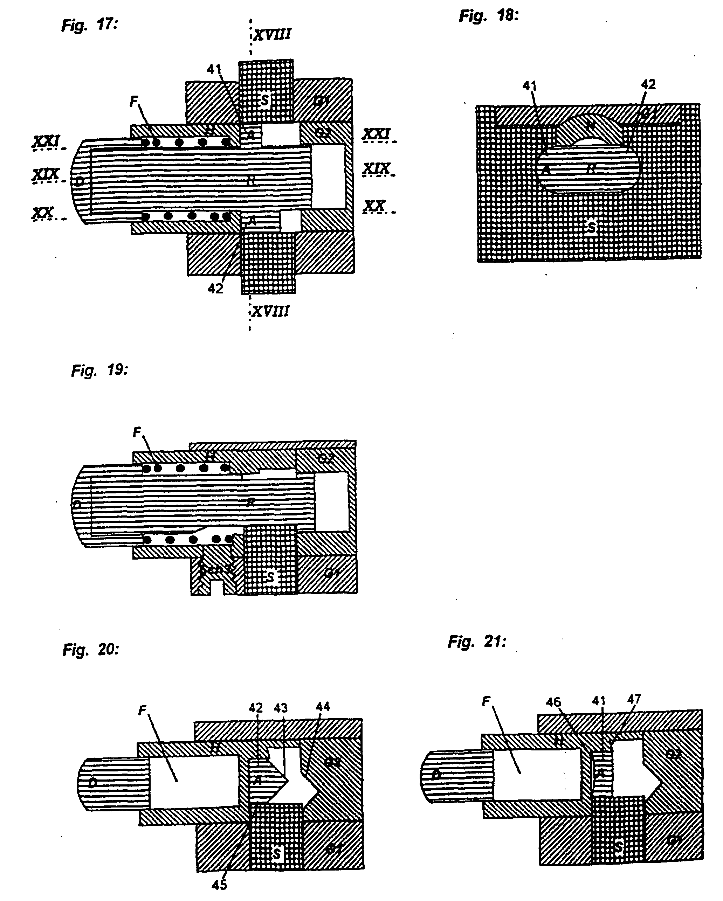

Die Verriegelung der Prothese wird dadurch bewirkt, dass der Riegel R durch die Federkraft mit seinen für die Verriegelung wirksamen Anteilen 7 (Fig. 3 und 5) von der Abzugsrichtung der Prothese aus gesehen unter Bereiche am Stegforsatz bzw. Steg S geschoben wird. Der Riegel R liegt hier in einem kongruenten Riegelauge 8 (Fig. 5) des Stegfortsatzes bzw. Stegs S. Allerdings muss der Steg S keine zum Riegel kongruente Ausnehmung zeigen. Entscheidend ist, dass der Riegel Bereiche des festsitzenden Teils S untergreift. Der Riegel R ist im Beispiel nach Fig. 1 rund, was jedoch nicht zwingend erforderlich ist. Verbindungselemente mit anderen Querschnittsformen sind beispielsweise in den Figuren 12 und 18 gezeigt. Die runde Querschnittsform weist jedoch herstellungstechnische Vorteile auf. Andererseits kann durch eine entsprechende Querschnittsform die Verriegelungswirkung verbessert werden. So sind beispielsweise beim Verbindungselement aus Fig. 18 die für die Verriegelung wirksamen Teile des Riegels R vergrößert, und beim Verbindungselement nach Fig. 12 untergreifen diese Anteile Bereiche des festsitzenden Teils S mindestens annähernd im rechten Winkel zur Abzugsrichtung.

Zur Abnahme der Prothese drückt der Patient mit der Fingerkuppe auf den Druckknopf D. Hierdurch wird der Riegel R gegen die Feder F verschoben, wobei die für die Verriegelung wirksamen Anteile 7 (Fig. 3 und 5) des Riegels R aus den unterschnittenen Bereichen am Stegfortsatz bzw. Steg S herausbewegt werden. Der Bereich des Durchtritts des Riegels R durch das Riegelauge 8 (Fig. 5) wird nun von den seitlichen Abflachungen 9 des Riegels R (Fig. 3) vollständig eingenommen. Die Prothese könnte nun wie bei einem halbautomatischen Riegel abgenommen werden. Der Patient soll jedoch wie bei einem vollautomatischen Riegel den Druckknopf D vor Abnahme der Prothese loslassen können. Deshalb muss nun die Arretiervorrichtung in Funktion treten. Die Feder F wirkt über den Bolzen B auf eine Schrägfläche 10 an der Arretiervorrichtung A ein (Fig. 1 und 2). Die Arretiervorrichtung A liegt mit einer basalen Anschlagfläche 11 (Fig. 1 und 2) am Grund des Riegelauges 8 auf. Da die Konstruktion nun entriegelt ist, kann die Federkraft die Arretiervorrichtung A relativ zum Gehäuse G und zum Riegel R etwas in basaler Richtung bewegen und infolge des Aufliegens der Arretiervorrichtung A am Grund des Riegelauges 8, also am festsitzenden Teil, das gesamte Verbindungselement und damit die Prothese etwas in okklusaler Richtung anheben. Falls die Reibung zwischen den verschiedenen Bauteilen größer ist als die Federkraft, wird das leichte Anheben des Verbindungselements durch ein weiteres Drücken des Druckknopfs D sichergestellt. Der Riegel R stößt dann mit einem Anschlag 12 gegen einen Anschlag 13 am Bolzen B (Fig. 1 und 2), wodurch der Bolzen B mit dem Riegel R mitbewegt wird. Über die Schrägfläche 10 an der Arretiervorrichtung A sowie die basale Anschlagfläche 11 an der Arretiervorrichtung A (Fig. 1 und 2) und ihre Auflage am Grund des Riegelauges 8 wird nun, wie oben beschrieben, das Anheben des Verbindungselements bewirkt. Infolge der Relativbewegung der Arretiervorrichtung A in basaler Richtung kommt nun, wie in Fig. 2 dargestellt, die Anschlagfläche 6 des Riegels R hinter die Anschlagfläche 14 der Arretiervorrichtung A zu liegen. Ein Zurückführen des Riegels R mit dem Druckknopf D durch die Feder F wird so verhindert, der Riegel ist arretiert. Die Arretiervorrichtung A wird durch die Kraft der Feder F, die über dem Bolzen B auf die Schrägfläche 10 der Arretiervorrichtung einwirkt, in dieser in basaler Richtung verschobenen Position gehalten. Der Druckknopf D kann nun zur Abnahme der Prothese losgelassen werden.

Infolge des unvermeidlichen Spiels zwischen den Bauteilen und aufgrund der Geometrie der Arretiervorrichtung A wird die Basalbewegung der Arretiervorrichtung A keine reine Parallelveschiebung sein. Vielmehr wird sie vor der Verschiebung in basaler Richtung zunächst an ihrer dem Bolzen B zugewandten Seite etwas in basaler Richtung abkippen. Bei ausreichend genauer Fertigung der Teile wird sich dieser Effekt aber nicht so stark auswirken, dass die Funktion des Verbindungselements beeinträchtigt ist. Eine verbesserte Parallelverschiebung der Arretiervorrichtung A kann dadurch erreicht werden, dass man einen Zapfen von der dem Druckknopf D abgewandten Seite des Gehäuses G in die Bohrung 1 des Riegels (Fig. 1 bis 3, Fig. 5) bis nahe an den Bolzen B hineinragen lässt, an welchem nun die entsprechend kürzer gestaltete Arretiervorrichtung A in basaler Richtung geführt wird. Die Arretiervorrichtung A wird dadurch aber unhandlicher. Außerdem ist der Bauaufwand für das Gehäuse G erhöht.

Wie dargestellt, kann die Arretiervorrichtung A durch die Wirkung der Kraft der Feder F oder infolge der Bewegung des Riegels R in basaler Richtung bewegt werden. Es sind genauso Konstruktionen möglich, die sich nur einen dieser Effekte zunutze machen. Die Übertragung der Bewegung des Riegels R in eine Basalbewegung der Arretiervorrichtung A kann anstatt über den Bolzen B auch über eine direkt am Riegel angebrachte Anschlagfläche erfolgen. Das Halten der Arretiervorrichtung A in der in basaler Richtung verschobenen Position kann auch dadurch bewirkt werden, dass die Anschlagflächen 6 und 14 (Fig. 1 und 2) nicht genau senkrecht zur Bewegungsrichtung des Riegels R, sondern etwas schräg dazu ausgebildet werden, wobei diese Flächen an ihrem okkulusalen Ende näher zum Druckknopf D liegen als an ihrem basalen Ende. Eine derartige Lösung wurde im in Fig. 21 dargestellten Verbindungselement gewählt und ist weiter unten näher beschrieben.

Die Arretiervorrichtung A ist gegen ein Herausfallen in basaler Richtung dadurch gesichert, dass sie in ihrer in basaler Richtung verschobenen Position mit einer Anschlagfläche 15 im Riegel R aufsitzt sowie mit einer Anschlagfläche 16 gegen den Bolzen B stößt (Fig. 2). Es gibt aber auch andere Möglichkeiten, die Arretiervorrichtung A gegen Herausfallen in basaler Richtung zu sichern. Es kann beispielsweise anstatt der Anschlagfläche 16 auch ein basaler Anschlag vom Druckknopf D aus gesehen vor der Ausnehmung 5 des Gehäuses G vorgesehen werden. Man kann diesen basalen Anschlag auch in die Ausnehmung 5 legen, indem man sie unterhalb des Fortsatzes 4 der Arretiervorrichtung A schließt.

Bei Eingliederung der Prothese stößt die Arretiervorrichtung A mit ihrer basalen Anschlagfläche 11 (Fig. 1 und 2) auf ihre Auflage am Grund des Riegelauges 8 und wird dadurch relativ zum Gehäuse G und zum Riegel R wieder etwas in okklusaler Richtung bewegt. Der Anschlag 14 der Arretiervorrichtung A gibt nun den Anschlag 6 des Riegels R wieder frei, so dass die Feder F den Riegel R mit dem Druckknopf D wieder zurückführen kann. Die Prothese ist nun verriegelt.

Eine Demontage der beweglichen Teile zu Austausch- und Reparaturzwecken ist leicht möglich. Mit einem feinen Instrument wird die Arretiervorrichtung A im Bereich der basalen Fläche 11 in okklusaler Richtung gedrückt, wobei zunächst der Bolzen B gegen die Feder F bewegt wird. Die Arretiervorrichtung A wird dabei etwas gedreht, da sie mit ihrer vom Bolzen B abgewandten Seite oben im Gehäuse G anstößt. Sobald der Fortsatz 4 aus der zugehörigen Ausnehmung 5 des Gehäuses G bewegt ist, kann der Riegel R komplett mit der Feder F, dem Bolzen B und der Arretiervorrichtung A herausgezogen werden. Es sind auch analoge Konstruktionen mit hülsenförmiger Schraube, wie in den Verbindungselementen von Fig. 11 und 15 dargestellt, oder mit einer von basal eingesetzen Schraube wie im Verbindungselement aus Fig. 16 möglich, wobei dann die Demontage nach Entfernung der Schraube erfolgen kann.

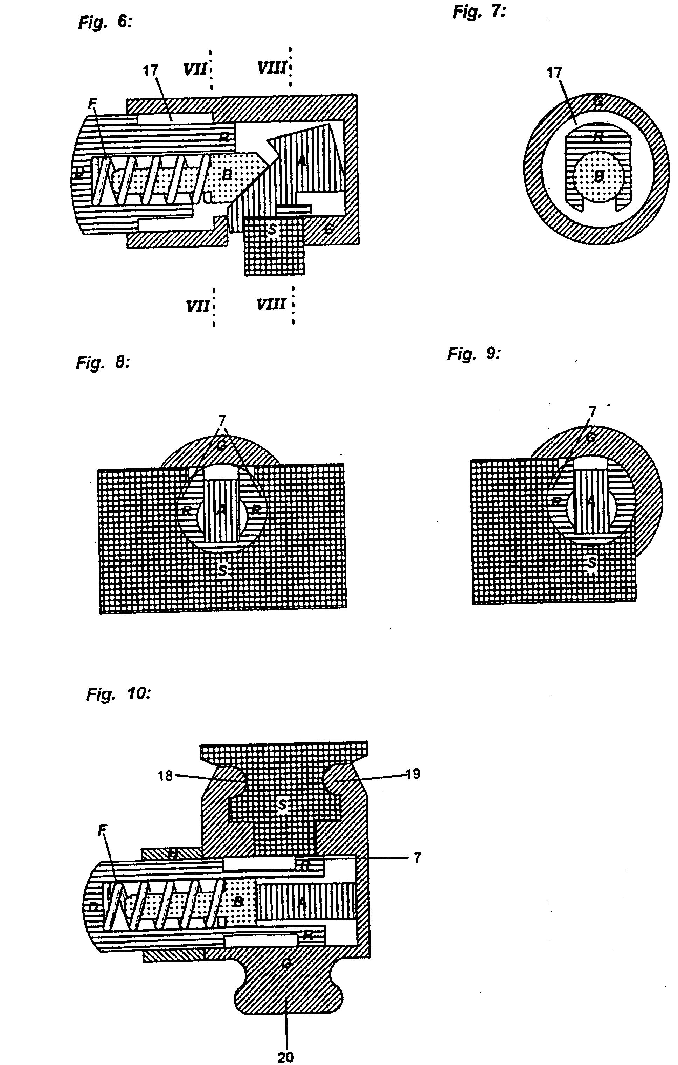

In den Figuren 6 bis 8 ist eine Abwandlung des beschriebenen Verbindungselements gezeigt, welche funktionell diesem entspricht, sich jedoch in der Form des Gehäuses G unterscheidet. Das Gehäuse G ist hier hülsenförmig ausgebildet. Man kann dieses Gehäuse in Richtung der Riegellängsachse kurz gestalten, so dass dann zur Führung des Riegels R im Prothesenkörper wiederum eine zusätzliche Hülse H eingebaut werden kann. Man kann das Gehäuse G, wie hier dargestellt, auch lang gestalten, so dass die zusätzliche Hülse H entfallen kann. Wie hier gezeigt, kann der Druckknopf D zur besseren Bedienbarkeit auch mit größerem Durchmesser als der Rest des Riegels R ausgestaltet werden. In den Leerraum 17 (Fig. 6, 7) zwischen Riegel R und Gehäuse G könnte zur Verbesserung der Federfunktion eine weitere, gleich wie die Feder F wirkende Feder eingesetzt werden. Es sind auch Konstruktionen möglich, bei denen sich die Feder komplett außerhalb des Riegels befindet. Der Riegel R greift hier mit seinen für die Verriegelung wirksamen Anteilen 7 (Fig. 8) beidseitig in Unterschnitte am Stegfortsatz oder Steg S ein.

Fig. 9 zeigt eine Abwandlung dieser hülsenförmigen Gehäuseform, bei der der Riegel R mit seinen wirksamen Anteilen 7 nur einseitig in einen Stegfortsatz S eingreift. Fig. 10 zeigt eine Anwendung am Stegfortsatz mit ebenfalls einseitigem Eingriff der wirksamen Riegelanteile 7, wobei der Stegfortsatz zur Verbesserung der Führungsfunktion bei Eingliederung der Prothese hier halbrund dargestellte Führungsrillen 18 aufweist. In diese Führungsrillen können entweder Anteile des Prothesengerüsts oder - wie hier gezeigt - Führungsanteile 19 des Gehäuses G eingreifen. Das Gehäuse G trägt einen schwalbenschwanzartigen Fortsatz 20, der insbesondere bei der Klebetechnik die Verbindung zwischen Verbindungselement und Prothesengerüst verbessert. Bei dieser Konstruktion ist es notwendig, für links- und rechtsseitige Anwendung zwei verschiedene Versionen des Gehäuses G zur Verfügung zu stellen. Zur Vermeidung dieser beiden Versionen für beidseitige Anwendung besteht auch die Möglichkeit, das Gehäuse aus zwei Teilen zu bilden, wobei der zweite hülsenförmige Gehäuseanteil, der ähnlich aussieht wie in Fig. 9 gezeigt, beidseitig in einen kastenförmigen ersten Gehäuseanteil einsetzbar ist, der dem Stegfortsatz aufsitzt. Eine Sonderform des Gehäuses kann für die interdentale Anwendung zwischen zwei Teleskopkronen entworfen werden. Es muss dann extrem schmal ausgebildet werden.

In den Figuren 11 bis 14 ist ein zweites Verbindungselement dargestellt. Auf einem Stegfortsatz S, der hier eckig dargestellte Führungsrillen 21 (Fig. 11) aufweisen kann, ist ein Gehäuse G aufgesetzt. In dieses Gehäuse G lässt sich beidseitig eine hülsenförmige Schraube Sch1 einsetzen, in der der Riegel R mit Druckknopf D geführt ist, wobei der Riegel R durch einen Fortsatz 22 (Fig. 14) gegen Herausfallen gesichert ist und eine Demontage nach Entfernen der Schraube Sch1 leicht erfolgen kann. Die der Schraube Sch1 gegenüberliegende öffnung kann durch eine Schraube Sch verschlossen sein. Alle Bauteile sind so gestaltet, dass sie beidseitig anwendbar sind. In senkrechter Richtung verschieblich ist eine Arretiervorrichtung A im Gehäuse G gelagert. Der Riegel R untergreift mit seinen für die Verriegelung wirksamen Anteilen 23, die hier eine senkrecht zur Abzugsrichtung liegende Fläche bilden, die unterschnittenen Bereiche am Stegfortsatz einseitig (Fig. 12). Die Funktion der Feder F, des Bolzens B und der Arretiervorrichtung A entspricht im Wesentlichen den entsprechenden Elementen beim weiter oben dargestellten Verbindungselement. Im Gegensatz zu diesem liegt die Arretiervorrichtung A mit ihrer Anschlagfläche 24 jedoch oben am Stegfortsatz S auf (Fig. 12). Bei Betätigen des Druckknopfs D bewirkt diese Auflage ein geringes Anheben des Verbindungselements. Die Arretiervorrichtung A bewirkt dann mit ihrer Anschlagfläche 26 (Fig. 14), gegen die der Riegel R mit seiner Anschlagfläche 25 (Fig. 14) stößt, die Arretierung des Riegels R.

Beim in Fig. 15 gezeigten Verbindungselement ist die sich innerhalb von Schlitzen des Riegels R befindende Arretiervorrichtung A mit einem basalen Fortsatz 27 in einer basalen Ausnehmung des Gehäuses G derart gelagert, dass sie um eine quer zur Längsachse des Riegels R liegende Achse 28 drehbar ist und eine Rotation des Riegels R um seine Längsachse nicht möglich ist. Die hülsenförmige Schraube Sch1 sichert die Arretiervorrichtung A und somit auch den Riegel R gegen Herausfallen, da er mit einem Anschlag 29 gegen die Arretiervorrichtung A stößt. Bei Betätigen des Druckknopfs D bewirkt die an der Arretiervorrichtung A ansetzende Feder F, die auch mit der Arretiervorrichtung A fest verbunden sein kann, eine Drehung der Arretiervorrichtung A um die Drehachse 28 vom Druckknopf D weg. Dasselbe bewirkt eine Anschlagfläche 30, die beim weiteren Drücken des Druckknopfs D ebenfalls gegen einen Anschlag 31 der Arretiervorrichtung A stößt. Eine basale Anschlagfläche 32 der Arretiervorrichtung A liegt unten am Stegfortsatz oder Steg S auf und bewirkt infolge der Drehung wie beim in den Figuren 1 bis 5 dargestellten Verbindungselement ein geringes Anheben des Verbindungselements, wobei dann der Riegel R mit dem Anschlag 29 gegen eine Anschlagfläche 33 der Arretiervorrichtung A stößt und so arretiert wird. Bei Wiedereingliederung der Prothese stößt die Anschlagfläche 32 der Arretiervorrichtung A auf den Stegfortsatz bzw. Steg S auf und wird dadurch zurückgedreht und gibt den Riegel R wieder frei.

Bei dem in Fig. 16 gezeigten Verbindungselement ist die Arretiervorrichtung A im Gegensatz zu den bisher beschriebenen Verbindungselementen nicht im Gehäuse G, sondern im Riegel R in einer senkrechten Richtung verschieblich gelagert. Eine aus basaler Richtung in eine Nut 34 des Riegels R ragende Schraube Sch2 sichert den Riegel R gegen Herausfallen und gegen Rotation. Bei Betätigen des Druckknopfs D wird die Arretiervorrichtung A gegen den von einer Feder F beaufschlagten Bolzen B bewegt. Die Federkraft bewirkt über den Bolzen B und eine Schrägfläche 35 an der Arretiervorrichtung A eine geringe Basalbewegung derselben relativ zum Gehäuse G. Da die Arretiervorrichtung A mit einer basalen Anschlagfläche 36 dann am Stegfortsatz oder Steg S aufliegt, kommt es zu einem geringfügigen Anheben des Verbindungselements in Abzugsrichtung. Wenn die Federkraft zur Auslösung dieser Bewegung nicht ausreicht, wird beim weiteren Drücken des Druckknopfs D dasselbe durch ein Anstoßen des Bolzens B mit einer Anschlagfläche 37 an einem zugehörigen Anschlag 38 des Gehäuses G ausgelöst. Die Arretierung des Riegels R wird dann dadurch bewirkt, dass die Arretiervorrichtung A mit einer Anschlagfläche 39 an einer Anschlagfläche 40 des Gehäuses G anstößt. Durch die Federkraft, die über den Bolzen B auf die Schrägfläche 35 der Arretiervorrichtung A einwirkt, wird das Verbindungselement in dieser leicht angehobenen Lage gehalten. Bei Wiedereingliederung der Prothese wird die Arretiervorrichtung A vom Stegfortsatz bzw. Steg S über ihre basale Anschlagfläche 36 nach oben gestoßen und gibt den Riegel R wieder frei.

Die Figuren 17 bis 21 zeigen eine völlig andere Konstruktion eines Verbindungselements. Ein aus herstellungstechnischen Gründen aus zwei Teilen G1 und G2 zusammengesetzes Gehäuse sitzt auf einem Stegfortsatz oder Steg S auf. Eine Hülse H ist ins Gehäuse eingesetzt und wird durch eine basale Schraube Sch3 gesichert (Fig. 19), welche zur Demontage entfernbar ist. In der Hülse H und im Gehäuseteil G2 ist ein Riegel R in seiner Längsachse verschiebbar und um seine Längsachse begrenzt rotierbar gelagert. Auf den Riegel R ist ein Druckknopf D aufgesetzt, wobei die Verbindung zwischen beiden Teilen durch Presspassung, Verbolzung oder Verschraubung erfolgen kann. Gegen den Druckknopf D wirkt eine um den Riegel R gelegte Feder F. Der Riegel R greift beidseitig mit seinen für die Verriegelung wirksamen seitlichen Fortsätzen 41 und 42 in unterschnittene Bereiche am Stegfortsatz oder Steg S ein (Fig. 17, 18). Bei Druck auf den Druckknopf D stößt der Fortsatz 42 mit einer schrägen Anschlagfläche 43 gegen eine Anschlagfläche 44 des Gehäuseteils G2 (Fig. 20), wobei der Riegel R um seine Längsachse in Rotation versetzt wird. Da derselbe Fortsatz 42 mit einer basalen Anschlagfläche 45 (Fig. 20) auf dem Stegfortsatz oder Steg S aufliegt, wird dabei das Verbindungselement etwas in Abzugsrichtung angehoben. Beim Loslassen des Druckknopfs D setzt die Feder F den Riegel R zunächst etwas zurück. Ein weiteres Zurückführen des Riegels wird jedoch dadurch verhindert, dass infolge der Rotation des Riegels der Fortsatz 41 mit einem Anschlag 46 an einem Anschlag 47 der Hülse H anstößt (Fig. 21). Die Flächen 46 und 47 sind nicht genau rechtwinklig zur Bewegungsrichtung des Riegels R angeordnet. Sie liegen in okklusaler Richtung näher zum Druckknopf D als in basaler Richtung. Dies hat zur Folge, dass die in Richtung des Druckknopfs D wirkende Federkraft den Riegel R und damit das Verbindungselement in dieser Position hält. Die Fortsätze 41 und 42 wirken also zusammen als Arretiervorrichtung A. Der Druckknopf D kann nun zur Abnahme der Prothese losgelassen werden. Bei Wiedereingliederung der Prothese rotiert der Riegel R infolge des Aufschlagens der basalen Anschlagfläche 45 am Stegfortsatz oder Steg S zurück. Die Feder F kann nun den Riegel R in die Verriegelungsstellung zurückführen.

Von den beschriebenen Konstruktionen sind durch geringe Veränderungen nicht dargestellte konstruktive Abwandlungen möglich, bei denen beim Drücken des Druckknopfes D die Arretiervorrichtung A das Verbindungselement zwar leicht anhebt, auf die Arretierung des Riegels R durch die Arretiervorrichtung A selbst jedoch verzichtet wird. Indirekt arretiert die Arretiervorrichtung A den Riegel R dabei zunächst trotzdem. Durch das leichte Anheben der Prothese kann der Riegel ja nicht mehr in die zugehörigen Unterschnitte zurückgesetzt werden. Bei Abnahme der Prothese wird er jedoch durch die Feder F zurückgeführt, so dass Schrägflächen vorgesehen sein müssen, die den Riegel R bei der Eingliederung der Prothese gegen die Kraft der Feder F führen.

Die Bauteile können zweckmäßigerweise als Konfektionsteile hergestellt werden und beispielsweise aus einer Dentallegierung gefertigt sein. Die Feder kann aus einem geeignetem Federwerkstoff, beispielsweise aus einem Edelstahl oder einer geeigneten Titanlegierung, hergestellt werden. Die Feder kann bei entsprechender Abwandlung der Konstruktion auch aus einem elastischen Kunststoffkörper bestehen. Der Riegelkopf im in den Figuren 17 bis 21 dargestellten Verbindungselement kann aus Kunststoff hergestellt sein, ebenso die Hülsen der Verbindungselemente aus den Figuren 1 bis 5 und 10 und 16. Sie können dann in die Prothese einpolymerisiert werden. Der Stegfortsatz oder Steg kann aus ausbrennbarem Kunststoff gefertigt sein und wird dann mit der restlichen festsitzenden Konstruktion mitgegossen. Ferner kann der Stegfortsatz oder Steg aus einer angussfähigen Legierung bestehen. Das Gehäuse wird beispielsweise durch Kleben, Schweißen oder Löten im Prothesengerüst befestigt, wobei aus biologischen Gründen bevorzugt die Klebetechnik oder die Laserschweißung zur Anwendung kommen sollte. Im Prothesengerüst muss eine passende Ausnehmung für das Verbindungselement geschaffen werden. Hierzu können Doublierhilfsteile aus Kunststoff oder Metall oder Hilfsteile aus Keramik Anwendung finden.

Eine Sonderform der Erfindung besteht darin, dass auf das Gehäuse G verzichtet wird und die Führung für den Riegel R und die übrigen Ausnehmungen des Gehäuses G direkt im Prothesengerüst hergestellt werden. So könnten beispielsweise beim in Fig. 16 dargestellten Verbindungselement die Ausnehmungen für den Riegel R und die Schraube Sch2 durch Bohren hergestellt werden, wobei die Lage der Bohrungen zueinander mittels einer Bohrlehre festgelegt werden könnte. In die Bohrung für die Schraube Sch2 müsste anschließend ein Gewinde eingeschnitten werden. Man könnte dabei den Durchgang des Riegels R durch den Stegfortsatz oder Steg S zusammen mit seiner Führung im Prothesengerüst herstellen. Eine andere Möglichkeit der Herstellung der Ausnehmungen ist die Funkenerosion. Ferner können beispielsweise beim in Fig. 1 bis 10 dargestellten Verbindungselement für die Führung des Riegels R sowie die Ausnehmung 5 des Fortsatzes 4 ein Hilfsteil aus Keramik ins Prothesengerüst einmodelliert werden, welches nach dem Guss leicht durch Ausstrahlen aus dem Prothesengerüst entfernbar ist. Dieses Hilfsteil kann auch aus einem hochschmelzenden Metall, zum Beispiel Nickel, gefertigt sein, das sich nach dem Guss mit einer geeigneten Säure z. B. Salpetersäure, herauslösen lässt.

Durch geringe Veränderungen kann der Riegel auch in einer halbautomatischen Version angeboten werden. Beispielsweise kann die Arretiervorrichtung A derart modifiziert werden, daß die Anschlagfläche 16 (Fig. 2) bereits in der Verriegelungsstellung auf dem Bolzen B aufliegt und so eine Verschiebung der Arretiervorrichtung in basaler Richtung nicht möglich ist.

Wenn man in der Führung des Riegels R ein Innengewinde anlegt, kann anstatt des Riegel eine Schraube eingesetzt werden, welche mit ihrem vom Schraubenkopf abgewandten Ende mit gleichem Durchmesser wie der Riegel zylindrisch ausgebildet ist. Durch Einsetzen der Schraube kann so eine feste Verbindung zwischen dem festsitzendem Teil und dem die Schraube tragenden Sekundärteil hergestellt werden. Dies ist beispielsweise dann sinnvoll, wenn dieses Sekundärteil fest auf Brückenpfeilern aufsitzt, die jedoch langfristig eine zweifelhafte Prognose aufweisen. Nach Verlust dieser Brückenpfeiler läßt sich die Konstruktion leicht in eine abnehmbare Prothese umbauen, indem man die Verschraubung löst und anstatt der Schraube einen Riegel einsetzt.

## Patentansprüche

1. Verbindungselement zur Befestigung abnehmbarer Zahnprothesen an Zahnkronen oder Zahnimplantaten mit einem quer zur Abzugsrichtung der Prothese verschieblich gelagerten Riegel (R), der mit seinen für die Verriegelung wirksamen Anteilen durch die Kraft einer oder mehrerer Federn (F) von der Abzugsrichtung der Prothese aus gesehen unter Bereiche eines an eine oder mehrere Zahnkronen bzw. ein oder mehrere Zahnimplantate angeformten festsitzenden Elements (S) führbar und durch Betätigen eines auf den Riegel (R) wirkenden Druckknopfs (D) mit seinen für die Verriegelung wirksamen Anteilen gegen diese Federkraft wieder aus diesen Bereichen entfernbar ist, das für den Riegel (R) eine Arretiervorrichtung (A) vorgesehen ist, **dadurch gekennzeichnet, dass** die Arretiervorrichtung (A) bei Betätigen des Druckknopfs (D) durch eine in Richtung der Verschiebungsbewegung des Riegels (R) wirkende Federkraft oder die Bewegung des Riegels (R) selbst oder beide Wirkungen zusammen derart bewegbar ist, dass sie über Anschlagflächen ein geringes Anheben des Verbindungselements in Abzugsrichtung der Prothese bewirkt.

2. Verbindungselement nach Anspruch 1, **dadurch gekennzeichnet, dass** nach Betätigen des Druckknopfs (D) eine in Richtung der Verschiebungsbewegung des Riegels (R) wirkende Federkraft durch das Zusammenwirken von Anschlag- und Führungsflächen das Verbindungselement in einer in Abzugsrichtung der Prothese etwas angehobenen Position hält.

3. Verbindungselement nach Anspruch 1 oder 2, **dadurch gekennzeichnet, dass** der Riegel (R) und die Arretiervorrichtung (A) in einem Gehäuse (G, G1/G2) geführt sind, das beispielsweise kastenförmig oder hülsenförmig ausgebildet ist und das durch Löten, Schweißen oder Kleben im Prothesengerüst befestigbar ist, wobei die Ausnehmung im Prothesengerüst zur Aufnahme des Gehäuses mittels Hilfsteilen aus Kunststoff, Metall oder Keramik vorformbar ist und die Verbindung zum Prothesengerüst durch einen schwalbenschwanzartigen Fortsatz (20) herstellbar ist.

4. Verbindungselement nach Anspruch 1 oder 2, **dadurch gekennzeichnet, dass** der Riegel (R) und die Arretiervorrichtung (A) in entsprechenden Ausnehmungen direkt im Prothesengerüst geführt sind, welche beispielsweise durch Bohren, durch Funkenerosion und/oder durch Verwendung von Hilfsteilen aus Keramik oder einem hochschmelzenden Metall herstellbar sind.

5. Verbindungselement nach einem der Ansprüche 1 bis 4, **dadurch gekennzeichnet, dass** die Arretiervorrichtung (A) ein eigenständiges, beweglich gelagertes Teil bildet, das bei Betätigen des Druckknopfs (D) durch die Kraft mindestens einer Feder (F) und/oder das Zusammenwirken von Anschlag- und Führungsflächen in Bewegung versetzbar ist und durch Anstoßen einer Anschlagfläche (11, 24, 32, 36) am festsitzenden Element (S) ein geringes Anheben des Verbindungselements in Abzugsrichtung bewirkt.

6. Verbindungselement nach Anspruch 5, **dadurch gekennzeichnet, dass** die Arretiervorrichtung (A) im Gehäuse (G), im Prothesenkörper oder im Riegel (R) mindestens entlang einer okklusal-basalen Richtung verschieblich und/oder um eine quer zur Bewegungsrichtung des Riegels (R) liegende Achse drehbar gelagert ist, wobei ein Herausfallen in basaler Richtung durch Anschläge beispielsweise am Gehäuse (G) oder an einem Bolzen (B) verhindert wird.

7. Verbindungselement nach einem der Ansprüche 1 bis 6, **dadurch gekennzeichnet, dass** bei Betätigen des Druckknopfs (D) und nach Loslassen des Druckknopfs (D) die Kraft der mindestens einen Feder (F) direkt, wobei sie auch an der Arretiervorrichtung (A) befestigt sein kann, oder über einen Bolzen (B) indirekt auf die Arretiervorrichtung (A) übertragbar ist.

8. Verbindungselement nach einem der Ansprüche 1 bis 7, **dadurch gekennzeichnet, dass** bei Betätigen des Druckknopfs (D) die Bewegung des Riegels (R) direkt oder über einen Bolzen (B) indirekt auf die Arretiervorrichtung (A) übertragbar ist.

9. Verbindungselement nach einem der Ansprüche 6 bis 8, **dadurch gekennzeichnet, dass** bei Betätigen des Druckknopfs (D) sowohl die Kraft der mindestens einen Feder (F) als auch mittels Anschlagflächen (12, 13, 37, 38) die Bewegung des Riegels (R) auf denselben Bolzen (B) und über weitere Anschlagflächen (10, 35) auf die Arretiervorrichtung (A) übertragbar sind.

10. Verbindungselement nach einem der Ansprüche 1 bis 4, **dadurch gekennzeichnet, dass** die Arretiervorrichtung (A) mit dem Riegel (R) ein gemeinsames Teil bildet, das neben der verschieblichen Lagerung zusätzlich um eine in Richtung der Verschiebungsbewegung liegende Achse begrenzt drehbar gelagert ist und bei Betätigen des Druckknopfs D durch das Zusammenwirken von Anschlag- und Führungsflächen in Drehung versetzt wird und durch Anstoßen einer Anschlagfläche (45) am festsitzenden Element (S) ein geringes Anheben des Verbindungselements in Abzugsrichtung bewirkt.

11. Verbindungselement nach einem der Ansprüche 1 bis 10, **dadurch gekennzeichnet, dass** die Arretiervorrichtung (A) den Riegel (R), nachdem er bei Betätigen des Druckknopfs (D) gegen die Kraft mindestens einer Feder (F) bewegt wurde, bei Abnahme der Prothese durch das Zusammenwirken von Anschlagflächen (6, 14, 25, 26, 29, 33, 39, 40, 46, 47) in dieser Position festhält und bei Eingliederung der Prothese infolge des Anstoßens von Anschlagflächen (11, 24, 32, 36) der Arretiervorrichtung (A) am festsitzende Element (S) wieder freigibt, so dass er durch die Federkraft wieder zurückgeführt werden kann.

12. Verbindungselement nach einem der Ansprüche 1 bis 10, **dadurch gekennzeichnet, dass** der Riegel (R), nachdem er bei Betätigen des Druckknopfs (D) gegen die Kraft mindestens einer Feder (F) bewegt wurde, bei Abnahme der Prothese durch die Federkraft wieder zurückgeführt wird und bei Eingliederung der Prothese durch die Wirkung schräger Führungsflächen erneut gegen die Kraft der mindestens einen Feder (F) bewegt wird, wobei er dann durch die Federkraft wiederum zurückgeführt wird, wenn die Prothese ganz eingesetzt ist.

13. Verbindungselement nach einem der Ansprüche 1 bis 12, **dadurch gekennzeichnet, dass** die beweglichen Teile durch die Arretiervorrichtung (A) selbst, durch eine in Richtung der Verschiebungsbewegung des Riegels (R) eingesetzte hülsenförmige Schraube (Sch1) oder durch eine von der basalen Richtung her eingesetzte Schraube (Sch2, Sch3) gegen Herausfallen in Richtung der Kraft der Feder (F) gesichert sind und die Demontage durch Hineindrücken der Arretiervorrichtung (A) gegen die über Anschlagflächen auf diese einwirkende Federkraft oder durch Entfernen der Schrauben (Sch1, Sch2, Sch3) erfolgt.

14. Verbindungselement nach einem der Ansprüche 1 bis 13, **dadurch gekennzeichnet, dass** das festsitzende Element durch einen Stegfortsatz oder Steg (S) gebildet wird, wobei Teile des Prothesengerüsts oder des Gehäuses (G) in Führungsrillen eingreifen können und der Riegeleingriff einseitig oder beidseitig erfolgen kann.

15. Verbindungselement nach einem der Ansprüche 1 bis 14, **dadurch gekennzeichnet, dass** zur besseren Führung des Riegels (R) durch den Prothesenkörper eine Hülse (H) vorgesehen ist.

16. Verbindungselement nach einem der Ansprüche 1 bis 15, **dadurch gekennzeichnet, dass** der Durchmesser des Druckknopfs (D) gleich groß oder größer ist als der Durchmesser des Riegels (R), wobei der Druckknopf (D) und der Riegel (R) ein gemeinsames Teil bilden oder durch Presspassung, Verbolzung oder Verschraubung miteinander verbunden sind.

17. Verbindungselement nach einem der Ansprüche 1 bis 16, **dadurch gekennzeichnet, dass** sich die Feder (F) innerhalb des Riegels (R) oder außerhalb des Riegels (R) zwischen dem Riegel (R) und dem Gehäuse (G), einer außenliegenden Hülse (H) oder einer hülsenförmigen Schraube (Sch1) befindet.

18. Verbindungselement nach einem der Ansprüche 1 bis 17, **dadurch gekennzeichnet, dass** die Einzelbauteile als Konfektionsteile aus einer Dentallegierung, aus Titan, aus einem Federwerkstoff oder aus Kunststoff gefertigt sind.

## Claims

1. Connection element for the attachment of removable tooth dentures at crowns of teeth or tooth implants with a locking bar (R) supported slidable perpendicular to the pullout direction of the denture, wherein the locking bar is guidable by the force of one or several springs (F) as seen from the pullout direction of the denture under regions of a fixedly seated element (S) formed at one or several tooth crowns or, respectively, one or several tooth implants and wherein the locking bar with its parts effective for the locking is removable again out of these regions against this spring force by actuation of a pushbutton (D) acting upon the locking bar (R), a locking device (A) being provided for the locking bar (R), **characterized in that** the locking device (A) is movable upon actuation of the pushbutton (D) by a spring force acting in the direction of the shift motion of the locking bar (R) or by the motion of the locking bar (R) itself or by both effects together such that the locking device effects slight lifting of the connection element in pullout direction of the denture through limit stop faces.

2. Connection element according to claim one, **characterized in that** after the actuation of the pushbutton (D), a spring force acting in the direction of the shift motion of the locking bar (R) maintains the connection element in a slightly lifted position in the pullout section of the denture by the cooperation of limit stop faces and guide faces.

3. Connection element according to claim 1 or 2, **characterized in that** the locking bar (R) and the locking device (A) are guided in a casing (G, G1/G2), wherein the casing is for example formed box shaped or sleeve shaped and which is attachable by soldering, welding or gluing at the denture frame, wherein the recess in the denture frame is pre-formable with auxiliary parts out of plastic, metal or ceramic for receiving the casing and wherein the connection to the denture frame is produceable by a dovetail shaped extension (20).

4. Connection element according to claim 1 or 2, **characterized in that** the locking bar (R) and the locking device (A) are guided in corresponding recesses directly in the denture frame, which recesses are produceable for example by drilling, by spark erosion and/or by employing of auxiliary parts made of ceramics or out of a high melting metal.

5. Connection element according to one of the claims 1 through 4, **characterized in that** the locking device (A) forms a self-contained, movably supported part which is placeable into motion upon actuation of the pushbutton (D) by the force of at least one spring (F) and/or the co-action of limit stop faces and guide faces and which effects slight lifting of the connection element in pullout direction by pushing of a limit stop face (11,24,32,36) at the fixedly seated element (S).

6. Connection element according to claim 5, **characterized in that** the locking device (A) in the casing (G), in the denture body or in the locking bar (R) is supported slidable at least along a closing-basal direction and/or supported rotatable around an axis disposed perpendicular to the direction of motion of the locking bar (R), wherein a falling out in a basal direction is prevented by limit stops for example at the casing (G) or at the bolt (B).

7. Connection element according to one of the claims 1 through 6, **characterized in that** the force of the at least one spring (F) is directly transferable, wherein the spring (F) also can be attached at the locking device (A) or indirectly transferable onto the locking device (A) upon actuation of the pushbutton (D) and after releasing the pushbutton (D).

8. Connection element according to one of the claims 1 through 7, **characterized in that** the motion of the locking bar (R) is directly transferable or is indirectly transferable through a bolt (B) onto the locking device (A) upon actuation of the pushbutton (D).

9. Connection element according to one of the claims 1 through 8, **characterized in that** upon actuation of the pushbutton (D), both the force of the at least one spring (f) as well as by way of limit stop faces (12, 13, 37, 38)the motion of the locking bar (R) are transferable onto the same bolt (B) and through further limit stop faces (10,35) onto the locking device (A).

10. Connection element according to one of the claims 1 through 4, **characterized in that** the locking device (A) together with the locking bar (R) forms a common part, wherein the common part is supported limited rotatable around an axis disposed in the direction of the shifting motion in addition to a shiftable support and wherein upon actuation of the pushbutton D the common part is placed into rotation by the co-action of the limit stop faces and guide faces and wherein a slight lifting of the connection element in pullout direction is effected by pushing of one limit stop face (45) at the fixedly seated element (S).

11. Connection element according to one of claims 1 through 10, **characterized in that** the locking device (A) holds the locking bar (R), after the locking bar has been moved upon actuation of the pushbutton (D) against the force of at least one spring (F), in this position upon removal of the denture by the co-action of limit stop faces (6,14,25,26,29,33,39,40,46,47) and releases upon insertion of the denture based on the pushing of limit stop faces (11,24,32,36) of the locking device (A) again at the fixedly seated element (S), such that the locking bar (R) can be led back again by the spring force.

12. Connection element according to one of the claims 1 through 10, **characterized in that** the locking bar (R) is led back again by the spring force upon removal of the denture after moving the locking bar (R) upon actuation of the pushbutton (D) against the force of at least one spring (F), and wherein the locking bar (R) is moved again against the force of the at least one spring (F) during insertion of the denture by the action of inclined guide faces, wherein the locking bar (R) is then again led back by the spring force in case the denture is fully inserted.

13. Connection element according to one of the claims 1 through 12, **characterized in that** the movable parts are secured against falling out in the direction of the spring (F) by the locking device (A) itself, by a sleeve shaped screw (Sch1) inserted in the direction of the shifting motion of the locking bar (R) or by screw (Sch2, Sch3) inserted from the basal direction and wherein the disassembly is performed by pressing in of the locking device (A) against the spring force acting onto the locking device (A) through limit stop faces or by removing of the screw (Sch1, Sch2, Sch3).

14. Connection element according to one of the claims 1 through 13, **characterized in that** the fixedly seated element is formed by a web extension or by a web (S), wherein parts of the denture framed or of the casing (G) can engage in guide grooves and wherein the locking bolt engagement can be performed one-sided or two sided.

15. Connection element according to one of the claims 1 through 14, **characterized in that** a sleeve (H) is provided for better guiding of the locking bar (R) through the prosthetic body.

16. Connection element according to one of the claims 1 through 15 **characterized in that** the diameter of the pushbutton (D) is of the same size or larger as the diameter of the locking bar (R), wherein the pushbutton (D) and the locking bar (R) form a common part or are connected to each other by press fitting, bolting or screwing together.

17. Connection element according to one of the claims 1 through 16, **characterized in that** the spring (F) is disposed within the locking bar (R) or outside of the locking bar (R) between the locking bar (R) and the casing (G), of an outside disposed sleeve (H) or of a sleeve shaped screw (Sch1).

18. Connection element according to one of the claims 1 through 17, **characterized in that** the individual construction parts are formed as confection parts out of a dental alloy, out of titanium, out of a spring material or out of plastic.

## Revendications

1. Élément d'assemblage pour fixer des prothèses dentaires amovibles sur des couronnes dentaires ou des implants dentaires, comprenant un verrou (R) monté coulissant transversalement à la direction de retrait de la prothèse, qui peut être guidé par ses parties actives pour le verrouillage, par la force d'un ou de plusieurs ressorts (F), vu de la direction de retrait de la prothèse sous des zones d'un élément (S) fixe conformé sur une ou plusieurs couronnes dentaires ou sur un ou plusieurs implants dentaires, et peut être de nouveau retiré de ces zones contre cette force de ressort par ses parties actives pour le verrouillage par actionnement d'un bouton-poussoir (D) agissant sur le verrou (R), un dispositif d'arrêt (A) étant prévu pour le verrou (R), **caractérisé en ce que** le dispositif d'arrêt (A), lors de l'actionnement du bouton-poussoir (D), peut être déplacé par une force de ressort agissant dans la direction du mouvement de translation du verrou (R) ou par le déplacement du verrou (R) lui-même ou par les deux effets conjoints, de telle sorte qu'il provoque un léger soulèvement de l'élément d'assemblage dans la direction de retrait de la prothèse par l'intermédiaire de surfaces de butée.

2. Élément d'assemblage suivant la revendication 1, **caractérisé en ce que**, après l'actionnement du bouton-poussoir (D), une force de ressort agissant dans la direction du mouvement de translation du verrou (R) maintient l'élément d'assemblage dans une position légèrement soulevée dans la direction de retrait de la prothèse par la coopération de surfaces de butée et de guidage.

3. Élément d'assemblage suivant l'une des revendications 1 et 2, **caractérisé en ce que** le verrou (R) et le dispositif d'arrêt (A) sont guidés dans un boîtier (G, G1/G2), qui peut être par exemple réalisé en forme de caisson ou en forme de manchon, et qui peut être fixé par brasage, soudage ou collage dans l'ossature de prothèse, le creux dans l'ossature de prothèse pour recevoir le boîtier pouvant être préformé au moyen de pièces auxiliaires en matière plastique, en métal ou en céramique, et l'assemblage avec l'ossature de prothèse pouvant être réalisé par un prolongement en queue d'aronde (20).

4. Élément d'assemblage suivant l'une des revendications 1 et 2, **caractérisé en ce que** le verrou (R) et le dispositif d'arrêt (A) sont guidés directement dans l'ossature de prothèse dans des creux correspondants, qui peuvent être fabriqués par exemple par perçage, par étincelage et/ou en utilisant des pièces auxiliaires en céramique ou en un métal à point de fusion élevé.

5. Élément d'assemblage suivant l'une des revendications 1 à 4, **caractérisé en ce que** le dispositif d'arrêt (A) forme une partie autonome, montée de façon mobile, qui peut être mise en mouvement lors de l'actionnement du bouton-poussoir (D) par la force d'au moins un ressort (F) et/ou par la coopération de surfaces de butée et de guidage, et qui provoque par l'impact d'une surface de butée (11, 24, 32, 36) sur l'élément fixe (S) un léger soulèvement de l'élément d'assemblage dans la direction de retrait.

6. Élément d'assemblage suivant la revendication 5, **caractérisé en ce que** le dispositif d'arrêt (A) est monté de façon mobile, au moins le long d'une direction occlusale-basale, dans le boîtier (G), le corps de prothèse ou le verrou (R) et/ou est monté tournant autour d'un axe situé transversalement à la direction de déplacement du verrou (R), une chute dans la direction basale étant empêchée par des butées par exemple sur le boîtier (G) ou sur un axe (B).

7. Élément d'assemblage suivant l'une des revendications 1 à 6, **caractérisé en ce que**, lors de l'actionnement du bouton-poussoir (D) et après le relâchement du bouton-poussoir (D), la force du au moins un ressort (F) est transmissible au dispositif d'arrêt (A) directement, le ressort pouvant être alors également fixé sur le dispositif d'arrêt (A), ou indirectement par l'intermédiaire d'un axe (B).

8. Élément d'assemblage suivant l'une des revendications 1 à 7, **caractérisé en ce que**, lors de l'actionnement du bouton-poussoir (D), le mouvement du verrou (R) est transmissible au dispositif d'arrêt (A) directement ou indirectement par l'intermédiaire d'un axe (B).

9. Élément d'assemblage suivant l'une des revendications 6 à 8, **caractérisé en ce que**, lors de l'actionnement du bouton-poussoir (D), aussi bien la force du au moins un ressort (F) que le mouvement du verrou (R) au moyen de surfaces de butée (12, 13, 37, 38) sont transmissibles au même axe (B) et par l'intermédiaire d'autres surfaces de butée (10, 35) au dispositif d'arrêt (A).

10. Élément d'assemblage suivant l'une des revendications 1 à 4, **caractérisé en ce que** le dispositif d'arrêt (A) forme avec le verrou (R) une partie commune, qui est montée en supplément, outre le montage mobile, en rotation limitée autour d'un axe situé dans la direction du mouvement de translation et est mise en rotation lors de l'actionnement du bouton-poussoir D par la coopération de surfaces de butée et de guidage et provoque par l'impact d'une surface de butée (45) sur l'élément fixe (S) un léger soulèvement de l'élément d'assemblage dans la direction de retrait.

11. Élément d'assemblage suivant l'une des revendications 1 à 10, **caractérisé en ce que** le dispositif d'arrêt (A) maintient le verrou (R), après qu'il a été déplacé contre la force d'au moins un ressort (F) lors de l'actionnement du bouton-poussoir (D), dans cette position, lors du retrait de la prothèse, par la coopération de surfaces de butée (6, 14, 25, 26, 29, 33, 39, 40, 46, 47), et le dégage de nouveau lors de l'incorporation de la prothèse par suite de l'impact de surfaces de butée (11, 24, 32, 36) du dispositif d'arrêt (A) sur l'élément fixe (S), si bien qu'il peut être de nouveau ramené par la force de ressort.

12. Élément d'assemblage suivant l'une des revendications 1 à 10, **caractérisé en ce que** le verrou (R), après son déplacement contre la force d'au moins un ressort (F) lors de l'actionnement du bouton-poussoir (D), est de nouveau ramené par la force de ressort lors du retrait de la prothèse, et de nouveau déplacé contre la force du au moins un ressort (F) lors de l'incorporation de la prothèse sous l'effet de surfaces de guidage obliques, étant ensuite de nouveau ramené par la force de ressort lorsque la prothèse est totalement mise en place.

13. Élément d'assemblage suivant l'une des revendications 1 à 12, **caractérisé en ce que** les parties mobiles sont protégées d'un chute dans la direction de la force du ressort (F) par le dispositif d'arrêt (A) lui-même, par une vis en forme de manchon (Sch1) mise en place dans la direction du mouvement de translation du verrou (R), ou par une vis (Sch2, Sch3) mise en place à partir de la direction basale, et le démontage est assuré par pression vers l'intérieur sur le dispositif d'arrêt (A) contre la force de ressort agissant sur ce dernier par l'intermédiaire de surfaces de butée, ou par le retrait des vis (Sch1, Sch2, Sch3).

14. Élément d'assemblage suivant l'une des revendications 1 à 13, **caractérisé en ce que** l'élément fixe est formé par un prolongement de traverse ou par une traverse (S), des parties de l'ossature de prothèse ou du boîtier (G) pouvant s'engager dans des gorges de guidage et la prise du verrou pouvant être assurée unilatéralement ou bilatéralement.

15. Élément d'assemblage suivant l'une des revendications 1 à 14, **caractérisé en ce qu'**un manchon (H) est prévu pour un meilleur guidage du verrou (R) au travers du corps de prothèse.

16. Élément d'assemblage suivant l'une des revendications 1 à 15, **caractérisé en ce que** le diamètre du bouton-poussoir (D) est égal ou supérieur au diamètre du verrou (R), le bouton-poussoir (D) et le verrou (R) formant une partie commune ou étant assemblés entre eux par ajustage serré, boulonnage ou vissage.

17. Élément d'assemblage suivant l'une des revendications 1 à 16, **caractérisé en ce que** le ressort (F) se situe à l'intérieur du verrou (R) ou à l'extérieur du verrou (R) entre le verrou (R) et le boîtier (G), un manchon extérieur (H) ou une vis en forme de manchon (Sch1).

18. Élément d'assemblage suivant l'une des revendications 1 à 17, **caractérisé en ce que** les composants individuels sont fabriqués en tant que pièces de confection en un alliage dentaire, en titane, en un matériau à ressort ou en matière plastique.
